# EUROPEAN PATENT APPLICATION

(11) **EP 1 435 597 A1**
(43) Date of publication of application: **07.07.2004**
(21) Application number: 01974844.1
(22) Date of filing: 12.10.2001
(51) Int. Cl.: G07F 7/10

(54) **ADVERTISEMENT PROVIDING METHOD BY AUTOMATIC TRANSACTION APPARATUS**

(71) Applicant: FUJITSU LIMITED, Kawasaki-shi, Kanagawa 211-8588 (JP)
(72) Inventor: IWAHASHI, Hiroki, c/o FUJITSU LIMITED, Kawasaki-shi, Kanagawa 211-8588 (JP)
(74) Representative: Stebbing, Timothy Charles
(86) International application number: PCT/JP2001/009018
(87) International publication number: WO 2003/034356

(57) **Abstract**

At least one advertisement corresponding to plural pieces of attribute information relating to a user is registered in an automatic transaction apparatus and, in the course of various transactions utilizing the automatic transaction apparatus, the automatic transaction apparatus displays an advertisement corresponding to the attribute information of the user and issues a coupon corresponding to the advertisement. In this manner, it is possible to utilize the automatic transaction apparatus as an advertising medium. Especially, the automatic transaction apparatus can acquire the attribute information of the user based on information stored in a transaction medium such as a cash card and it is possible to advertise effectively focusing on a specific target by displaying an advertisement corresponding to the attribute information.

## Description

### TECHNICAL FIELD

The present invention relates to a method of providing advertisements by an automatic transaction apparatus executing automatically transactions such as receiving/payment of cash in, for example, a financial institution such as a bank.

### BACKGROUND ART

In financial institutions such as banks, automatic transaction apparatuses such as automatic teller machines (ATM) that automatically execute cash-receiving/payment transactions and cash-depositing transactions, and cash dispensers (CD) that automatically execute cash-payment transactions are prevalent. When a customer inserts a transaction medium storing information for transactions such as a cash card into an automatic transaction apparatus and inputs predetermined transaction information such as a personal identification number and the amount to be transacted following an instruction displayed on a transaction screen, the automatic transaction apparatus automatically executes transactions such as cash-receiving processes and cash-payment processes, communicating with a host computer connected through a communication line.

Since such automatic transaction apparatuses are used by many customers everyday, they can be effective advertising media.

### DISCLOSURE OF THE INVENTION

The object of the present invention provides a method of providing advertisements utilizing an automatic transaction apparatus.

A first advertisement provision method of the present invention to achieve the above object is a method of providing advertisements by an automatic transaction apparatus for executing a predetermined transaction with a user utilizing a transaction medium that stores identification information of the user, the method comprising the steps of:
reading the identification information stored in the transaction medium;
acquiring attribute information of the user corresponding to the identification information read out from the transaction medium, from a host computer connected with the automatic transaction apparatus through a network; and
displaying an advertisement corresponding to the attribute information among a plurality of advertisements registered for each of plural pieces of attribute information.

A second advertisement provision method of the present invention according to the first advertisement provision method is characterized in that
the automatic transaction apparatus accumulates the number of times of display of the advertisement every time it displays the advertisement, and that
the host computer acquires the number of times of display of the advertisement from the automatic transaction apparatus and, after a predetermined period of time has passed, creates charging information corresponding to the number of times of display.

A third advertisement provision method of the present invention according to the second advertisement provision method is characterized in that
in the case where the advertisement is registered for the plural pieces of the attribute information, the number of times of display of the advertisement is accumulated for each piece of the attribute information.

A fourth advertisement provision method of the present invention according to the first advertisement provision method is characterized in that
in the case where a plurality of advertisements are registered for the attribute information, one advertisement is selected for display depending on the priority set in advance for each advertisement.

A fifth advertisement provision method of the present invention according to the first advertisement provision method is characterized in that
the automatic transaction apparatus issues a coupon corresponding to the advertisement after displaying the advertisement.

A sixth advertisement provision method of the present invention according to the fifth advertisement provision method is characterized in that
the automatic transaction apparatus accumulates the number of times of issuance of the coupon every time it issues the coupon, and that
the host computer acquires the number of times of issuance from the automatic transaction apparatus and, after a predetermined period of time has passed, creates charging information corresponding to the number of times of issuance.

A seventh advertisement provision method of the present invention according to the sixth advertisement provision method is characterized in that
in the case where the advertisement and a coupon corresponding thereto are registered for the plural pieces of attribute information, the number of times of display of the advertisement and the number of times of issuance of the coupon are accumulated for each piece of attribute information.

An eighth advertisement provision method of the present invention according to the fifth advertisement provision method is characterized in that
the automatic transaction apparatus issues the coupon by either printing of the coupon on a predetermined sheet or registering of data into the transaction medium.

A ninth advertisement provision method of the present invention according to the eighth advertisement provision method is characterized in that
the automatic transaction apparatus accumulates the number of times of issuance of the coupon for each issuance either by the printing or by the registering of data.

A tenth advertisement provision method of the present invention according to the first advertisement provision method is characterized in that
the attribute information includes at least one of the age, the sex and the balance in a deposit account set in a predetermined financial institution of the user.

An eleventh advertisement provision method of the present invention according to the first advertisement provision method is characterized in that
the transaction medium is an IC card.

Furthermore, an automatic transaction apparatus for implementing each of the above methods of providing advertisement, and a host computer connected with the apparatus through a network are provided.

### BRIEF DESCRIPTION OF THE DRAWINGS

Fig. 1 is a block diagram of an automatic transaction apparatus and a host computer according to an embodiment of the invention;
Fig. 2 is a diagram illustrating registration of information on advertisements and coupons;
Fig. 3 shows an example of an advertisement/coupon information table;
Fig. 4 shows an example of an advertisement/coupon selection table;
Fig. 5 is a flowchart of an advertisement-displaying-and-coupon-issuing process in an embodiment of the invention;
Fig. 6 shows an example of an initial screen before the start of a transaction;
Fig. 7 shows an example of a screen for inputting a personal identification number;
Fig. 8 shows an example of a screen for inputting an amount for payment;
Fig. 9 shows an example of a screen on standby;
Fig. 10 shows an example of a screen guiding to advertisements;
Fig. 11 shows an example of a screen showing an advertisement;
Fig. 12 shows an example of a coupon screen;
Fig. 13 shows an example of a screen showing the conclusion of a transaction;
Fig. 14 shows an example of coupons printed on a receipt sheet;
Fig. 15 shows an example of usage history information; and
Fig. 16 shows an example of a table of charges.

### BEST MODE FOR CARRYING OUT THE INVENTION

Now, an embodiment of the invention will be described with reference to the accompanying drawings. However, the technical scope of the invention is not limited to such an embodiment.

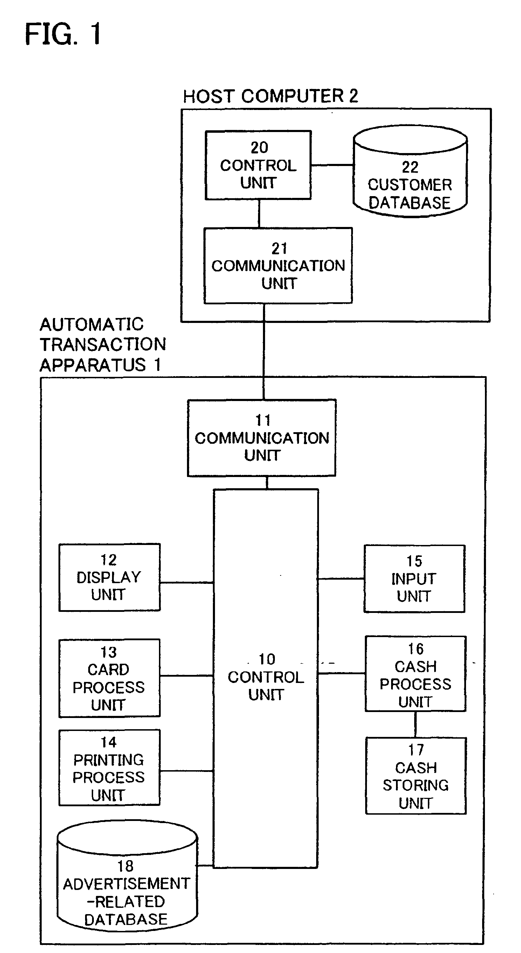

Fig. 1 is a block diagram of an automatic transaction apparatus and a host computer according to an embodiment of the invention. A transaction system comprises an automatic transaction apparatus and a host computer. A control unit 10 of an automatic transaction apparatus 1 deals with transactions such as cash-depositing transactions and cash payment transactions communicating with a host computer 2 through a communication unit 11. A display unit 12 displays guiding information etc. following the transaction steps. A transaction medium process unit 13 acquires customer's information such as the customer's account number from a transaction medium, i.e. , a cash card inserted froma card slot (and/or a bankbook inserted from a bankbook slot). The cash card is, for example, a magnetic card or an IC card. The magnetic card is a plastic card storing the above customer's information in a magnetic stripe adhering to the card. The IC card is a plastic card storing the above customer's data etc. in an LSI chip embedded in the card and integrating a CPU and a memory. The IC card can secure higher security and can store a larger volume of data compared to the magnetic card. A printing process unit 14 prints transaction statements etc. and ejects the transaction statements and receipts together with the cash card from the card slot. An operation unit 15 comprises a numeric keypad, and a touch panel provided to the display unit 12. A customer inputs his/her personal identification number and other necessary data from the operation unit 15. A cash process unit 16 executes processes such as paying out the amount of cash requested from a customer to a cash storing unit 17 and storing cash deposited by a customer in a cash storing unit 17. As described later, the automatic transaction apparatus 1 comprises an advertisement-related database (DB) 18 for storing information on advertisements and coupons and charging information.

A control unit 20 of a host computer 2 executes the management operation for transactions such as a validation process of a personal identification number transmitted from the automatic transaction apparatus 1 and a process for creating a transaction history and storing it in a customer database 22, communicating with the automatic transaction apparatus 1 through a communication unit 21. The customer database 22 stores customer information such as personal identification numbers of customers and transaction data such as transaction history for each customer.

In this configuration, in the embodiment of the invention, when a customer executes a transaction using the automatic transaction apparatus, the automatic transaction apparatus displays advertisements on the screen and, furthermore, issues coupons (such as discount coupons) corresponding to the advertisements. Furthermore, the automatic transaction apparatus preferably manages information on charging to sponsors of advertisement. Now, the embodiment will be described following the items of (1) registration of information on advertisements and coupons corresponding to them, (2) display of advertisements and issuance of coupons and (3) creation of usage history information and management of charging.

### (1) Registration of Information on Advertisements and Coupons Corresponding to Them

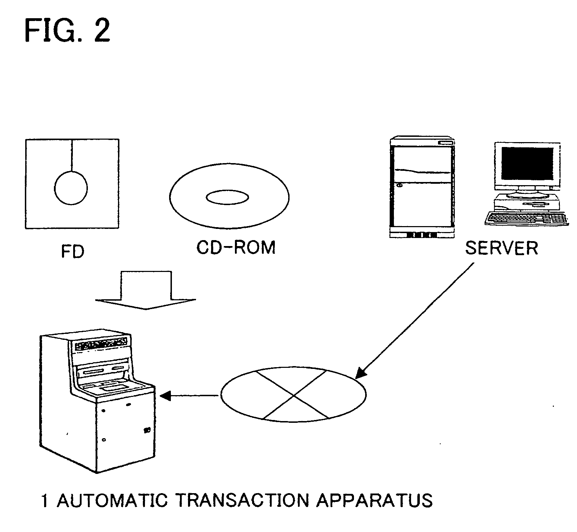

Fig. 2 is a diagram illustrating registration of information on advertisements and coupons. In Fig. 2, the information on advertisements and coupons is provided from sponsors of each advertisement. More specifically, the information on advertisements and coupons is stored in a storage medium (such as a floppy disk (FD) or a CD-ROM) provided by sponsors of advertisements and an operator operating the automatic transaction apparatus 1 registers into the advertisement-related database 18 the contents information of advertisements and coupons stored in the storage medium following a predetermined procedure. Otherwise, the contents information of advertisements and coupons is stored in a server operated by sponsors and the operator operating the automatic transaction apparatus 1 may download the contents information of advertisements and coupons stored in the server and register it into the advertisement-related database 18, following a predetermined procedure.

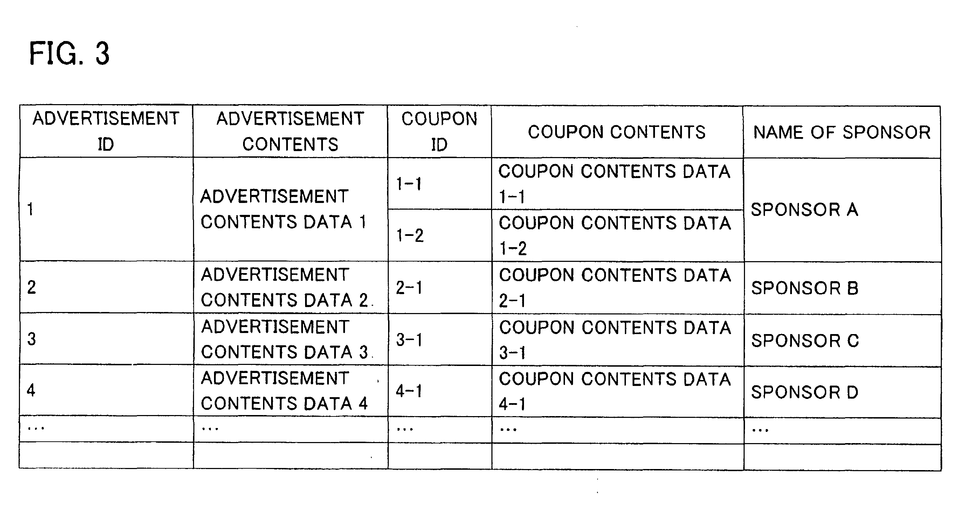

Fig. 3 is an example of an advertisement-and-coupon information table. The contents information of advertisements and coupons stored in the advertisement-related database 18 has, for each advertisement, an advertisement ID for identifying each advertisement, advertisement contents data corresponding to the advertisement ID, and a coupon ID for identifying each coupon corresponding to each advertisement and coupon contents data corresponding to the coupon ID. As described specifically later, in order to issue different coupons depending on the attributes of customers using the automatic transaction apparatus 1, a plurality of coupons may be registered for an advertisement. The names of sponsors providing advertisements are registered in this advertisement-and-coupon contents information table.

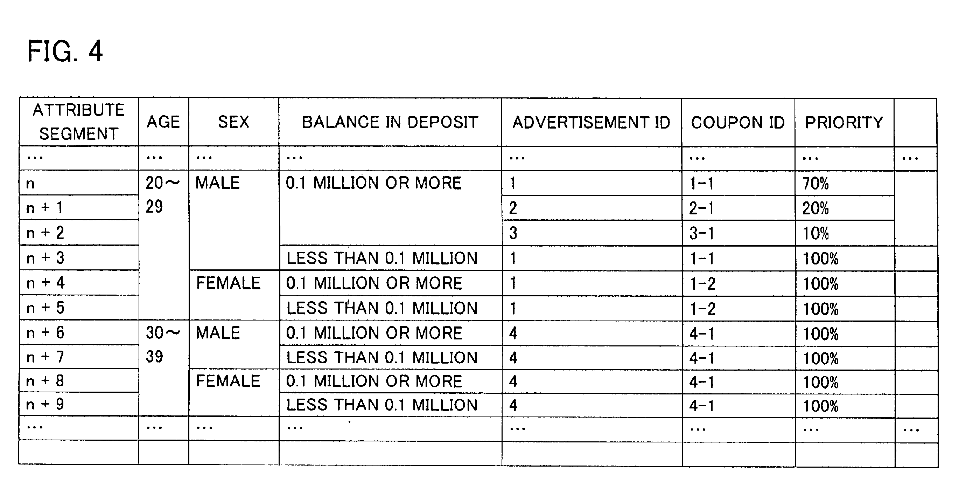

Fig. 4 is an example of an advertisement-and-coupon selection table. The automatic transaction apparatus 1 of the embodiment stores advertisement-and-coupon selection table (hereinafter, referred to as "selection table") for providing optimal advertisements and coupons in the advertisement-related database 18 according to attributes of customers. In the selection table, attribute information of customers is registered for each advertisement ID or coupon ID. The attribute information of a customer is, for example, the age, the sex and the balance of the deposit of the customer. This attribute information can be, for example, acquired from communication with a host computer in a financial institution utilizing customer data such as an account number read out from a cash card during a cash-receiving transaction or a cash-payment transaction.

Furthermore, in the selection table, the terms of validity or the priorities for which advertisements and coupons are provided can be registered. A priority represents the extent to which an advertisement is displayed with priority when a plurality of advertisements including it corresponding to the same attribute information are registered. For example, as shown in the figure, when three advertisements are registered for a kind of attribute information, the priority for each advertisement is determined such that the total of the priorities becomes 100% for the attribute information, for example, each priority is 70%, 20% and 10%. When the automatic transaction apparatus 1 displays an advertisement corresponding to an attribute for which a plurality of advertisements are registered, the apparatus 1 selects the advertisements to display using random numbers such that the probability of displaying becomes the priority. However, when only one (1) advertisement is registered for a kind of attribute information, the priority of the advertisement is 100%. The information registered in this selection table is designated by the sponsors providing advertisements.

### (2) Display of Advertisements and Issuance of Coupons

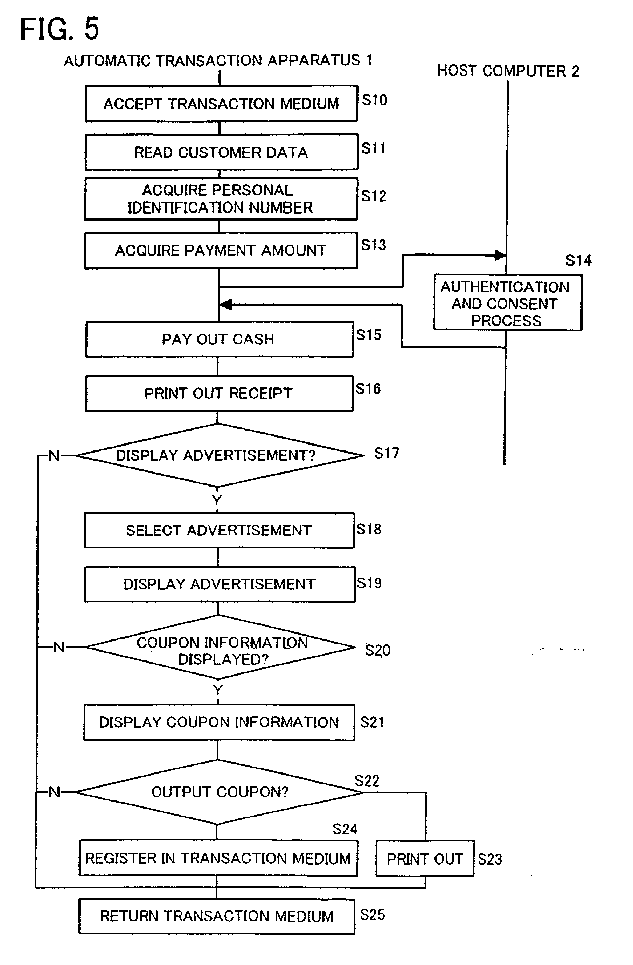

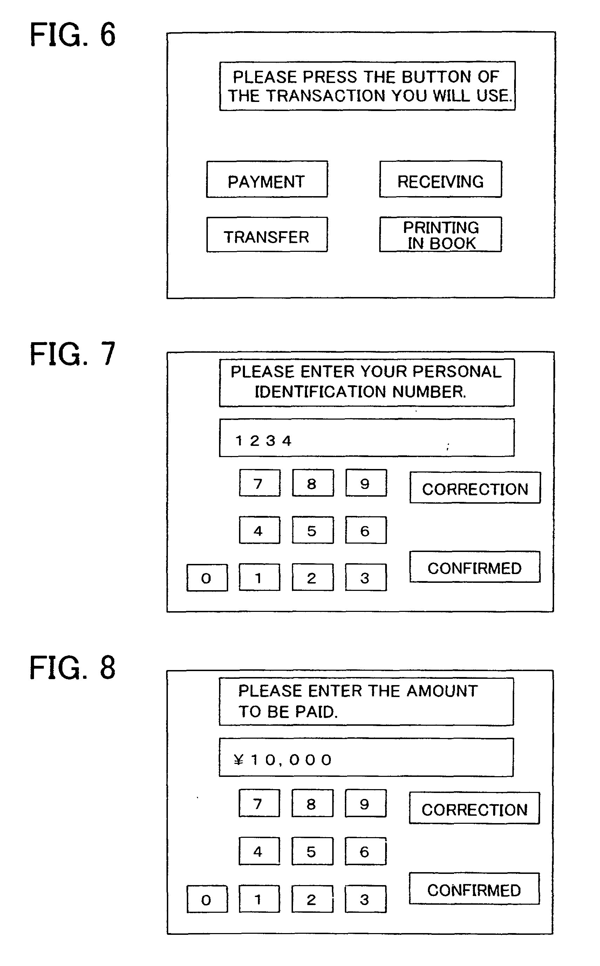

Fig. 5 is a flowchart of an advertisement-display-and-coupon-issuance process in an embodiment of the invention. Now, the process will be described taking an example of a cash-payment transaction. Figs. 6-13 are examples of screens displayed during transactions. By touching by a customer a "cash-payment" portion in a plurality of transaction processes displayed on the initial screen (see Fig. 6) of the display unit 12 having a touch panel function, a cash-payment transaction starts. The automatic transaction apparatus accepts a transaction medium (such as a cash card) inserted by the customer from a card slot (S10). The automatic transaction apparatus 1 reads out customer data stored in the transaction medium (S11). The customer data includes at least the customer's account number and may further include personal information such as the name of the customer.

The automatic transaction apparatus 1 displays a screen for inputting a personal identification number shown in Fig. 7 on the display unit 12 and acquires the personal identification number inputted by the customer (S12). Furthermore, the automatic transaction apparatus 1 displays a screen for inputting the amount for the payment of cash shown in Fig. 8 and acquires the amount for the payment of cash inputted by the customer (S13).

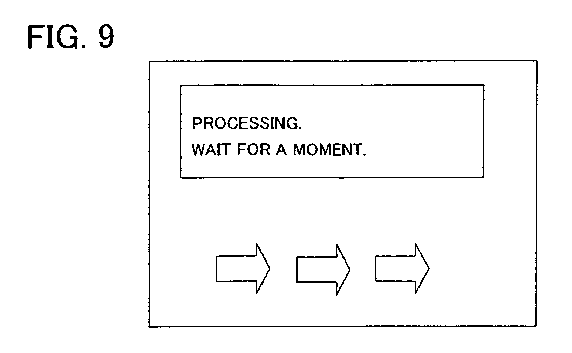

The automatic transaction apparatus 1 transmits the customer data read out from the transaction medium, and the personal identification number and payment amount inputted, to the host computer 2 in a financial institution. Until a response comes from the host computer 2, a screen on standby shown in Fig. 9 is displayed.

The host computer 2 executes an authentication process for the personal identification number and a payment consent process (checking whether the amount for the payment is lower than the balance of the deposit in the account) (S14), sends back to the automatic transaction apparatus 1 the resultant payment permission (OK)/rejection (NG) information, a transaction statement (such as the payment amount, the balance after the transaction, the date and time of the transaction), and attribute information of the customer (items in the attribute information of the customer in the selection table shown in the above Fig. 3). In the case of payment permission, the cash process unit 16 of the automatic transaction apparatus 1 pays out cash for the amount to be paid from the cash storing unit 17 (S15) and the printing process unit 14 outputs a receipt on which the transaction statement is printed (S16). In the case of payment rejection, predetermined error information is displayed on the display unit 12.

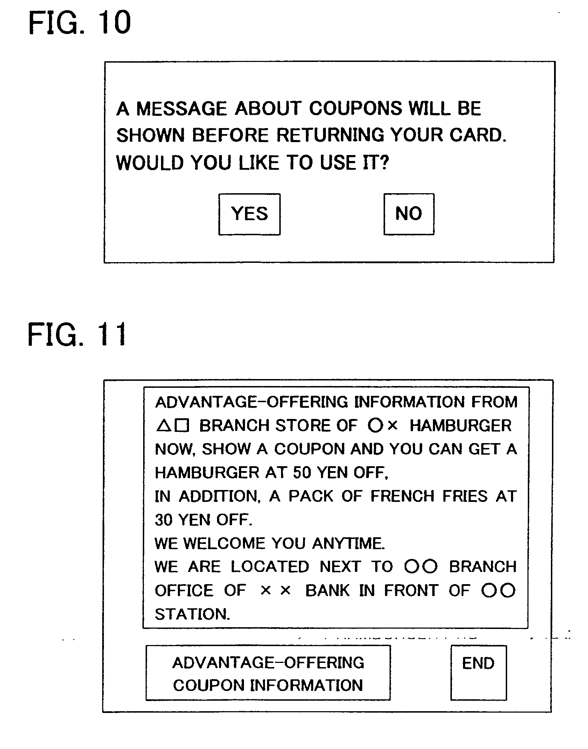

Then, after paying out cash and outputting the receipt and before returning the transaction medium (a cash card), the automatic transaction apparatus 1 displays a screen guiding to an advertisement shown in Fig. 10 and asks whether to display the advertisement (S17). In the case where the customer desires to use the advertisement (if "Y es" is selected), the automatic transaction apparatus 1 searches in the selection table according to the attribute information of the customer acquired from the host computer 2 and selects an advertisement that satisfies the attribute information (S18), and displays the selected advertisement (S19). When there are a plurality of advertisements that satisfy the attribute information, one of them is selected according to their priority.

Fig. 11 is an example of an advertisement screen. The selected advertisement is displayed in the advertisement screen. The customer can select whether to display coupons corresponding to the advertisement displayed using the advertisement screen shown in Fig. 11 (S20). More specifically, when the customer is not interested in the advertisement displayed, he/she selects "END" on the screen (touches the portion displaying "END"). Thereby, the cash card is returned and the transaction is concluded (S25). On the other hand, if the customer desires to cause coupons corresponding to the contents of the advertisement to be displayed, he/she selects "Convenient Coupon Information". Then, the automatic transaction apparatus 1 displays the coupons corresponding to the advertisement being displayed according to the selection table (S21).

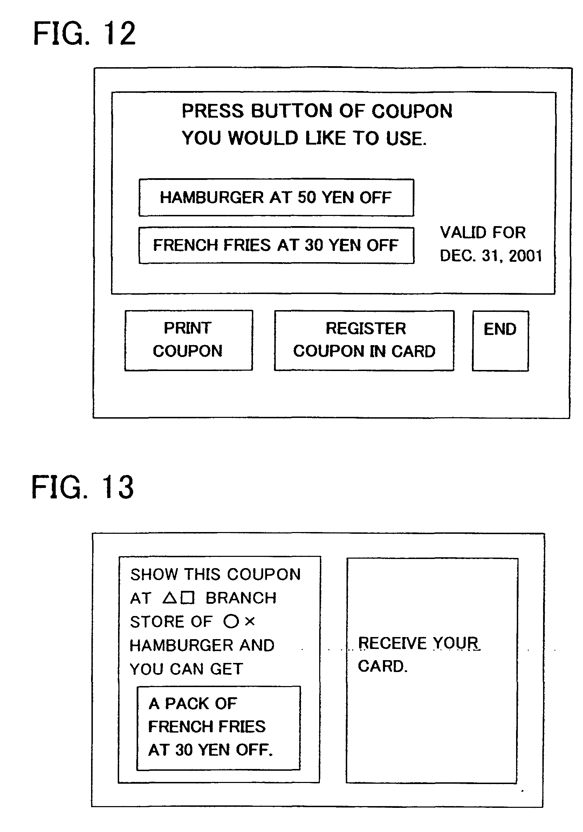

Fig. 12 is an example of a coupon screen. Coupons corresponding to the advertisement having been displayed are displayed in the coupon screen. As shown in the figure, the coupons are, for example, tickets for reducing prices of goods (discount coupons). The customer may select whether the coupon being displayed shall be issued or not (outputting the coupon by printing or registration of the data of the coupon into the cash card) (S22). In the case where the coupon is not necessary, the customer touches the portion displaying "END" on the screen shown in Fig. 12. Thereby, the cash card is returned and the transaction is concluded (S25).

In the case where the customer desires the coupon to be issued, the customer selects the issuing method by touching either of the portions displaying "Print Coupon" or "Register Coupon in Card" on the screen shown in Fig. 12. When "Print Coupon" is selected, the automatic transaction apparatus 1 issues the coupon by printing it on a receipt sheet to print the transaction statement such as payment transaction (S23). Surely, the sheet for printing the coupon may be prepared and the coupon may be printed on it and issued. When a plurality of coupons are displayed, the customer may select the coupon to be issued by touching the portion displaying desired coupons.

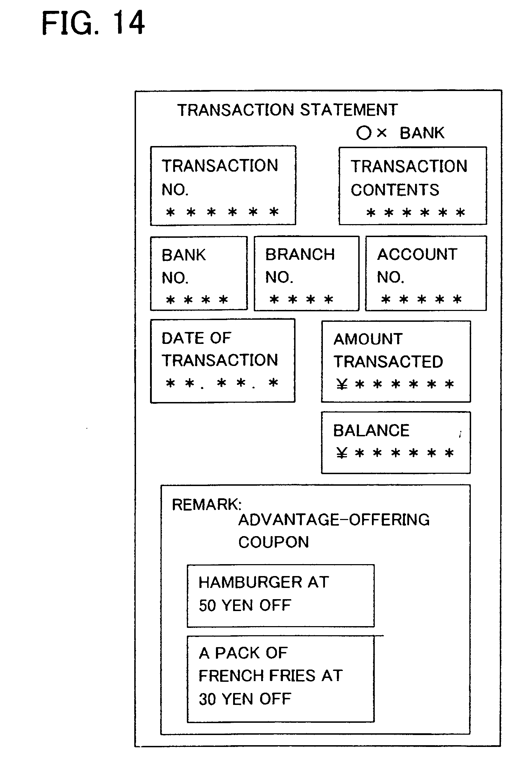

Fig. 14 is an example of coupons printed on a receipt sheet. As shown in the figure, the coupons are printed in, for example, the column for remarks of the receipt sheet. After the coupons have been printed out, the cash card is returned and the transaction is concluded (S25).

In the case where "Register Coupon in Card" is selected, the automatic transaction apparatus 1 registers the data of the coupon (coupon data) displayed (further selected) in the data storage area of the cash card (S24). The coupon data includes at least the data of (1) name of the sponsor, (2) the contents of the coupon and (3) the term of validity. Thereafter, the cash card in which the coupon data is registered is returned and the transaction is concluded (S25).

Fig. 13 is an example of a screen showing the conclusion of a transaction. In the transaction conclusion screen, the instruction for returning the cash card and the instruction for using the coupon for the case where a coupon is issued are displayed.

The customer can receive the service corresponding to the contents of the coupon by using the coupon at a store of the sponsor providing the coupon printed or stored in the cash card. For example, in the case where the coupon is a discount coupon for goods, the customer can receive the discount service of the goods by showing the printed coupon to a shop clerk when the payment for the goods is made. In the case where the coupon data is stored in the cash card, by reading out the coupon data using a settlement terminal capable of reading the cash card, the settlement terminal disposed in a store of the sponsor checks the name of sponsor and the term of validity and executes the discount (price reduction) process corresponding to the coupon data when the payment for the goods is made. After the discount (price reduction) process, the settlement terminal may delete the coupon data stored in the cash card or may leave it as it is. In the case where the coupon data is left as it is, the contents of the coupon of the coupon data can be used as many time as possible until the term of validity in the coupon data expires.

### (3) Creation of Usage History Information and Management of Charging

The automatic transaction apparatus 1 creates usage history information for the display of advertisements and coupons and manages charging based on the information.

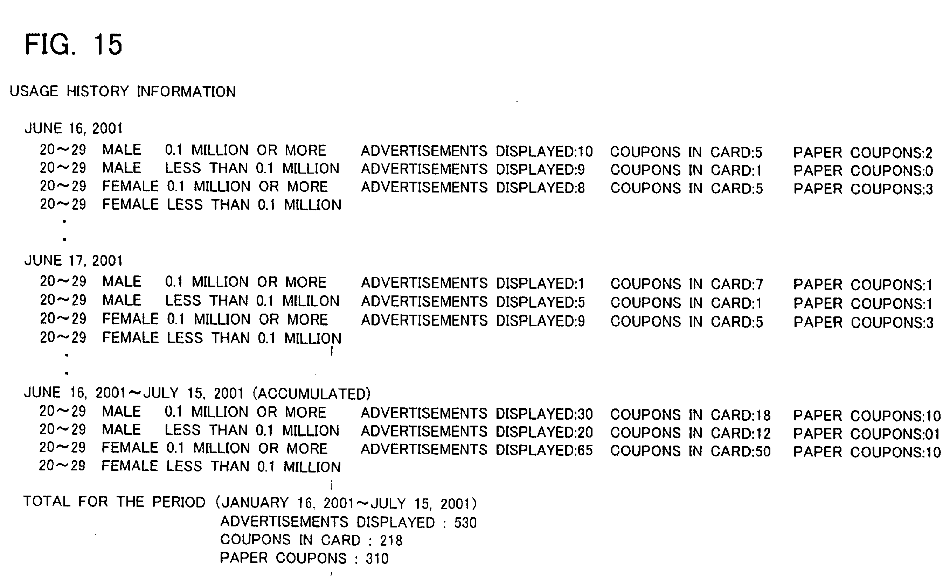

Fig. 15 is an example of the usage history information. The automatic transaction apparatus 1 creates usage history information for each sponsor. The usage history information registers the number of times of display of the advertisements and the number of times of the coupon issuance per one (1) day and, preferably, as shown in the figure, registers them by attribute segment of customers. The number of times of the coupon issuance is registered dividing them into the cases for printing them (issuance of "paper coupons") and the cases for registering them in cash cards (issuance of "card coupons"). Every time the automatic transaction apparatus 1 displays an advertisement or outputs a coupon, the apparatus 1 accumulates respectively the number of times of display of the advertisements and the number of times of the coupon issuance and updates the usage history information.

The usage history information may further have the summed data of respective number for a specific period of time ( for example, one (1) month) and may have the totaled data for the advertisement display term (the term of validity). The usage history information created is managed and transmitted to the host computer 2 after the advertisement display term has ended by the automatic transaction apparatus 1. The host computer 2 totals the usage history information of all of the automatic transaction apparatuses 1 and calculates the amount to charge to each sponsor (charging information). The automatic transaction apparatuses 1 may transmit the usage history information regularly (for example, everyday) to the host computer 2 and the host computer 2 may manage the usage history information. Furthermore, the above accumulated data and totaled data may be created on the side of the host computer 2.

The host computer 2 calculates the amount to charge to each sponsor based on the above usage history information regularly or after the advertisement display term has expired.

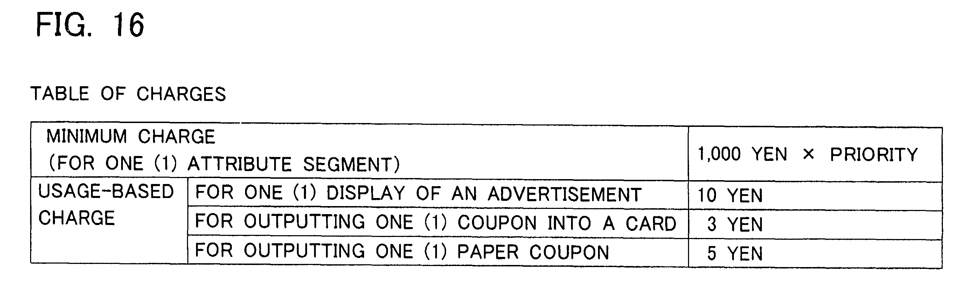

Fig. 16 is an example of a table of charges. In Fig. 16, the minimum charge is a fixed charge not related to the number of times of display of the advertisements and the coupons during the term of validity for them. Preferably, the minimum charge is an amount for one (1) attribute segment in the selection table shown in Fig. 4 and, furthermore, may by an amount acquired by multiplying a specific amount by its priority considering the priority. As usage-based charges, a charge for one (1) display of an advertisement, a charge of (1) printing and issuance of a coupon for one time, a charge for registration and issuance of coupon data for one time are set. The host computer 2 creates bills for charging calculated amounts to be charged and the created bills are sent to the sponsors. The usage history information described above is also valuable material for the sponsors as usage condition material of advertisements and coupons of users and is sent to the sponsors. The sponsors can hold effective publicity and advertising activities utilizing this usage history information.

In the above embodiment, the transactions utilizing the automatic transaction apparatus are not limited to the transactions such as receiving and payment of cash utilizing cash cards and may be, for example, cashing transactions and goods-purchasing transactions utilizing credit cards being one kind of transaction media. Furthermore, the automatic transaction apparatus is not limited to an ATM disposed in a branch office of a financial institution and may be, for example, a multi-purpose transaction terminal disposed in a convenience store.

### Industrial Applicability

As set forth hereinabove, according to the present invention, at least one (1) advertisement corresponding to information on a plurality of attributes relating to customers is registered in an automatic transaction apparatus and, in the course of each of various transactions utilizing the automatic transaction apparatus, the automatic transaction apparatus displays advertisement(s) corresponding to attribute information of a customer and issues coupon (s) for the advertisement (s). In this manner, the automatic transaction apparatus can be used as an advertisement medium. Especially, the automatic transaction apparatus can acquire the attribute information of the user based on information stored in a transaction medium and effective advertising focusing on its target is possible by displaying advertisement(s) corresponding to the attribute information of the user. Furthermore, since the automatic transaction apparatus charges for displays of advertisements and issuance of coupons, the automatic transaction apparatus accumulates the number of times of display of advertisements and the number of times of the coupon issuance and manages them.

The protective range of the invention is not limited to the above embodiment but covers the inventions as defined in the appended claims and their equivalents.

## Claims

1. A method of providing advertisements by an automatic transaction apparatus for executing a predetermined transaction with a user utilizing a transaction medium that stores identification information of the user, the method comprising the steps of:
reading the identification information stored in the transaction medium;
acquiring attribute information of the user corresponding to the identification information read out from the transaction medium, from a host computer connected with the automatic transaction apparatus through a network; and
displaying an advertisement corresponding to the attribute information among a plurality of advertisements registered for each of plural pieces of attribute information.

2. The method of providing advertisements according to claim 1, wherein
the automatic transaction apparatus accumulates the number of times of display of the advertisement every time it displays the advertisement, and wherein
the host computer acquires the number of times of display of the advertisement from the automatic transaction apparatus and, after a predetermined period of time has passed, creates charging information corresponding to the number of times of display.

3. The method of providing advertisements according to claim 2, wherein
in the case where the advertisement is registered for the plural pieces of the attribute information, the number of times of display of the advertisement is accumulated for each piece of the attribute information.

4. The method of providing advertisements according to claim 1, wherein
in the case where a plurality of advertisements are registered for the attribute information, one advertisement is selected for display depending on the priority set in advance for each advertisement.

5. The method of providing advertisements according to claim 1, wherein
the automatic transaction apparatus issues a coupon corresponding to the advertisement after displaying the advertisement.

6. The method of providing advertisements according to claim 5, wherein
the automatic transaction apparatus accumulates the number of times of issuance of the coupon every time it issues the coupon, and
the host computer acquires the number of times of issuance from the automatic transaction apparatus and, after a predetermined period of time has passed, creates charging information corresponding to the number of times of issuance.

7. The method of providing advertisements according to claim 6, wherein
in the case where the advertisement and a coupon corresponding thereto are registered for the plural pieces of attribute information, the number of times of display of the advertisement and the number of times of issuance of the coupon are accumulated for each piece of attribute information.

8. The method of providing advertisements according to claim 5, wherein
the automatic transaction apparatus issues the coupon by either printing of the coupon on a predetermined sheet or registering of data into the transaction medium.

9. The method of providing advertisements according to claim 8, wherein
the automatic transaction apparatus accumulates the number of times of issuance of the coupon for each issuance either by the printing or by the registering of data.

10. The method of providing advertisements according to claim 1, wherein
the attribute information includes at least one of the age, the sex and the balance in a deposit account set in a predetermined financial institution of the user.

11. The method of providing advertisements according to claim 1, wherein
the transaction medium is an IC card.

12. An automatic transaction apparatus for executing a predetermined transaction with a user utilizing a transaction medium that stores identification information of the user, the automatic transaction apparatus comprising:
a read-out unit for reading out the identification information stored in the transaction medium;
an acquisition unit for acquiring attribute information of the user corresponding to the identification information read out from the transaction medium, from a host computer connected with the automatic transaction apparatus through a network;
a storage unit for storing at least one advertisement corresponding to each of plural pieces of attribute information; and
a display unit for displaying the advertisement corresponding to the attribute information from advertisements stored in the storage unit.

13. The automatic transaction apparatus according to claim 12, wherein
the automatic transaction apparatus comprises a calculation unit for accumulating the number of times of display of the advertisement every time the advertisement is displayed, and wherein
the calculation unit transmits the number of times of display of the advertisement to the host computer that creates charging information corresponding to the number of times of display after a predetermined period of time has passed.

14. The automatic transaction apparatus according to claim 13, wherein
the calculation unit accumulates the number of times of display of the advertisement for each piece of the attribute information in the case where the advertisement is registered for the plural pieces of attribute information.

15. The automatic transaction apparatus according to claim 12, wherein
the display unit selects one advertisement depending on the priority set in advance for each advertisement and displays the selected advertisement in the case where a plurality of advertisements are registered for the attribute information.

16. The automatic transaction apparatus according to claim 12, wherein
the automatic transaction apparatus further comprises an issuance unit for issuing a coupon corresponding to the advertisement after displaying the advertisement.

17. The automatic transaction apparatus according to claim 16, wherein
the automatic transaction apparatus comprises a calculation unit for accumulating the number of times of issuance of the coupon every time the coupon is issued, and wherein
the calculation unit transmits the number of times of issuance to the host computer that creates charging information corresponding to the number of times of issuance after a predetermined period of time has passed.

18. The automatic transaction apparatus according to claim 17, wherein
the calculation unit accumulates the number of times of display of the advertisement and the number of times of issuance of the coupon for each piece of the attribute information in the case where the advertisement and a coupon corresponding thereto are registered for the plural pieces of attribute information.

19. The automatic transaction apparatus according to claim 16, wherein
the issuance unit issues the coupon by either printing of the coupon on a predetermined sheet or registering of data into the transaction medium.

20. The automatic transaction apparatus according to claim 19, wherein
the calculation unit accumulates the number of times of issuance of the coupon for each of the issuance by the printing or by the registration of data.

21. The automatic transaction apparatus according to claim 12, wherein
the attribute information includes at least one of the age, the sex and the balance in a deposit account set in a predetermined financial institution of the user.

22. The automatic transaction apparatus according to claim 12, wherein
the transaction medium is an IC card.

23. A transaction system executing a predetermined transaction with a user,the transaction system comprising:
an automatic transaction apparatus for accepting a transaction medium that stores identification information of the user; and
a host computer for communicating attribute information of the user, connected with the automatic transaction apparatus through a network, the automatic transaction apparatus comprising:
a read-out unit for reading out the identification information stored in the transaction medium;
an acquisition unit for acquiring attribute information of the user corresponding to the identification information read out from the transaction medium, from a host computer;
a storage unit for storing at least one advertisement corresponding to each of plural pieces of attribute information; and
a display unit for displaying the advertisement corresponding to the attribute information from advertisements stored in the storage unit.

24. The transaction system according to claim 23, wherein
the automatic transaction apparatus issues a coupon corresponding to the advertisement after displaying the advertisement.
